# EUROPEAN PATENT APPLICATION

(11) **EP 3 543 947 A1**
(43) Date of publication of application: **25.09.2019**
(21) Application number: 19164215.6
(22) Date of filing: 21.03.2019
(51) Int. Cl.: G06Q 40/00, G06Q 20/20, G06Q 20/32

(54) **SYSTEM, METHOD AND COMPUTER PROGRAM FOR AUTOMATICALLY OBTAINING AND MANAGING ELECTRONIC TAX DOCUMENTS CONNECTED TO MOBILE PAYMENTS**

(30) Priority: 22.03.2018 IT 201800003867
(71) Applicant: Mesaroli, Adriano, 38121 Trento (TN) (IT); Ricci, Filippo, 38122 Trento (TN) (IT); Gilioli, Marco, 40053 Bazzano (IT)
(72) Inventor: Mesaroli, Adriano, 38121 Trento (TN) (IT); Ricci, Filippo, 38122 Trento (TN) (IT); Gilioli, Marco, 40053 Bazzano (IT)
(74) Representative: Burchielli, Riccardo

(57) **Abstract**

A method for the tax management of payments, comprising the operations of electronically transferring an amount of money from a payer to a payee, obtaining by means of a first logic unit (2) a predetermined set of administrative and/or tax data relating to that money transfer, generating by means of a second logic unit (4) an electronic invoice and/or a draft of that invoice/invoicing data packet relating to that money transfer and electronically transmitting the invoicing data packet to one or more of the following subjects: a tax agency, the payer, the payee.

## Description

### Technical field

This invention relates to a system, a method and a computer program for the tax management of payments, in particular for the tax management of electronic invoices.

### Background art

At present most payment transactions occur, not just through the physical handing over of coins and bank notes, that is to say, "in cash", but also using electronic means of payment thanks to the use of so-called "bank money", a service made possible by a third party such as a "bank" through which the current accounts of the parties involved in the transaction are debited or credited.

The term "bank money" herein therefore refers to the use of an alternative payment system to the use of cash, for example payment cards (cash card, credit card, debit card, pre-paid cards, virtual currencies and digital applications) or bank transfers and direct debits.

Electronic payment systems, that is to say, using the long-distance electronic transmission of money, have in recent times been increasingly encouraged both for greater company efficiency and for curbing tax evasion, money laundering and fraud in general.

Also to promote greater company efficiency, electronic invoicing has recently been encouraged, that is to say, replacing traditional paper invoices with electronic invoices, in the form of digital documents or in any case on electronic or optical media.

However, the authors of this invention have observed that at present electronic invoicing is not much more efficient and advantageous for companies, since it is still largely performed manually, that is to say, by human operators who produce digital invoices rather than paper ones.

One aim of this invention is to overcome that disadvantage of the prior art, making the issuing and accounting of electronic invoices faster and more efficient.

### Disclosure of the invention

According to a first aspect of the invention, that aim is fulfilled with a method for the tax management of payments having the characteristics described in claim 1.

According to a second aspect of the invention, that aim is fulfilled with a system for the tax management of payments having the characteristics described in claim 9.

According to a third aspect of the invention, that aim is achieved with a computer program having the characteristics described in claim 10.

Further features of the invention are the subject of the dependent claims.

The advantages which can be achieved with this invention are more apparent, to technicians in the sector, from the following detailed description of several particular example embodiments of a non-limiting nature, illustrated with reference to the following schematic figures.

### List of the drawings

Figure 1 shows a system for the tax management of payments according to one particular embodiment of the invention;
Figure 2 shows a credit card and a customer data tag of the system of Figure 1;
Figure 3 shows the credit card of Figure 2 and a module of the system of Figure 1 suitable for extracting tax data from the control unit and/or from the data bus on board a car.

### Detailed description

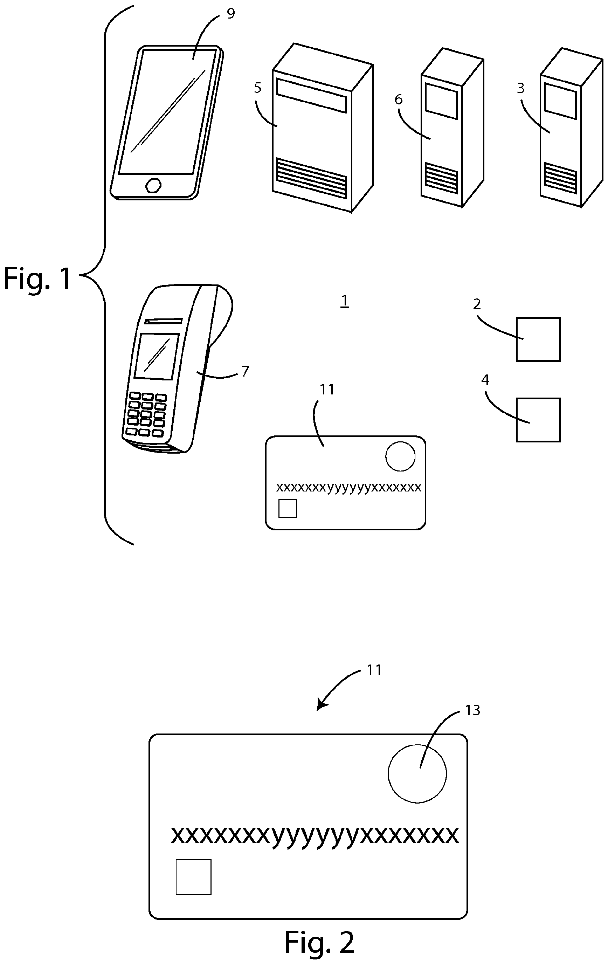

Figures 1 to 3 relate to a system and a method for the tax management of payments according to one particular embodiment of this invention, the system as a whole being labelled 1.

The system 1 may comprise for example a server 3, a client computer 5 and an electronic payment terminal - or, a POS - 7 and/or 9.

The payment terminal 7 is preferably a portable reader for cash cards or credit cards.

The payment terminal 9 may for example be a mobile phone owned by the payer, for example a customer of a shop.

The server 3 may be managed by the Italian Revenue Agency or another tax agency.

The client computer 5 and the payment terminal 7 may be managed for example by an actual retail shop - for example a supermarket, a corner shop such as a T-shirt shop, a pharmacy, the cash-desk of a hospital, a petrol station for vehicles or a department store - or an online shop, such as eBay or Amazon.

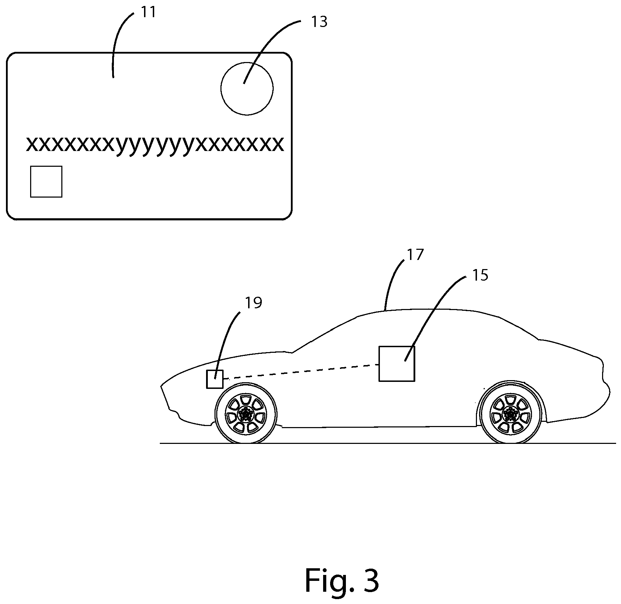

Advantageously, the system 1 comprises one or more customer data tags 13 (Figures 2, 3).

Each tag 13 may be made as a label or a microchip used to store the relevant tax data of the payer, for example the first name, surname, tax residence or domicile address, tax code and/or VAT number of the payer and/or of the payee, the B2B recipient code, PEC public certified e-mail address, health insurance number or code.

For that purpose, each tag 13 may contain a suitable digital memory, for example of the following type: RAM, EPROM, EEPROM, flash or magnetic core memory, F-RAM.

Alternatively each tag 13 may contain a simple identifier, for example a unique identifier in the form of an optically readable bar code or QR code, or an RFID tag, which allows an object such as a credit card, a smartphone or other mobile phone to be associated with the data of its owner or user which are stored not on the credit card, smartphone or other mobile phone, but instead in a remote database.

Each tag 13 may be fixed for example by means of adhesive on a credit card 11, on a cash card or on the outer shell of a smartphone or other mobile phone or hand-held device: this allows the adaptation of pre-existing, already issued credit cards and cash cards to the payment system 1, at very low cost and without compromising the security protocols of those cards in any way.

Alternatively each tag 13 may be inserted inside a smartphone or other mobile phone or hand-held device, if necessary fixing it on the motherboard or other printed circuit board, or even incorporated in a microprocessor of the hand-held device or other wearable device.

In another alternative each tag 13 may be made as a simple data packet, of tax significance, which is stored in the memory of a smartphone or other mobile phone or hand-held or wearable device, and the writing and reading of that data may if necessary be managed with a computer program loaded on the hand-held device - for example it may be managed with a suitable "app" loaded on the smartphone - and/or loaded on the payment terminal 7.

The method according to one aspect of the invention comprises the following operations:
S.1) electronically transferring an amount of money from a payer to a payee; S.2) obtaining by means of a first logic unit 2 a predetermined set of administrative and/or tax data relating to that money transfer;
S.3) on the basis of that administrative and/or tax data generating by means of a second logic unit 4 an electronic invoice and/or a draft of that invoice and/or an invoicing data packet relating to that money transfer; S.4) electronically transmitting the invoicing data packet to one or more of the following subjects: a tax agency, the payer, the payee.

Examples of electronic money transfers are a bank transfer, a payment made using a credit card or pre-paid card, a payment using currency issued by a sovereign state - for example euros, US Dollars, British Pounds Sterling, Japanese Yen - or using virtual money (e-cash or cybercoins) or bitcoins, or even a donation; therefore, "payer" may also mean a donor.

The expression "electronically transfer money" means a money transfer carried out using electronic devices such as computers, mobile phones, electronic payment terminals such as automatic cash dispensers and POS (Point Of Sale), keyboards, biometric recognition systems, electronic microchips, magnetic or electronic cards and related readers, electronic (telecommunications and informatics) networks.

Examples of administrative data of the operation S.2) are the date and time of the payment, the address or geographical coordinates - for example latitude, longitude or GPS system coordinates - of the place or zone where the payment is made or where it is received, quantity and type/description of the goods purchased or given (for example 2 mobile phones and 3 volumes of the novel "Moby Dick", publisher XXXYYY), VAT (Value Added Tax), VAT rate, any identifying number or code assigned to the money transfer by the bank or other payment intermediary or the currency used for transferring the money.

If fuel is purchased for a vehicle, examples of administrative data are also the vehicle registration plate, chassis number and mileage, the tax data of the owner and/or the user.

Examples of tax data of the operation S.2) are the first name, surname, tax residence or domicile address, tax code and/or VAT number of the payer and of the payee, the health insurance number or code of the payer for payment for medicines or medical services.

The tax data of the vendor or other payee of the operation S.2) may advantageously be obtained from the POS device 7, 9 with which the payment, donation or other money transfer is made.

More generally, the logic unit 2 which in the operation S.2) obtains the administrative and tax data may be a logic unit contained in the payment terminal 7 or 9, in the client computer 5 or if necessary in the server 3.

Advantageously, the logic unit 2 obtains that administrative and tax data automatically, that is to say, activated by a software program and/or by an electronic and electromechanical device without the intervention of a human operator.

More specifically, advantageously the first logic unit 2 begins obtaining that administrative and tax data automatically when the server 6 of the bank of the payee or other payment intermediary communicates to the payment terminal 7, 9 or in any case to the first logic unit 2 that the payment or other money transfer has been correctly completed, preferably without the logic unit 2 requiring human interventions in order to proceed.

The term "electronic invoice" means an invoice in digital format as required by Italian and/or European tax regulations; for example it may be a virtual electronic document or on media readable by an electronic or optical terminal, such as magnetic media, a CD-ROM or other optical media, a microchip with the invoice data stored in or written to it.

Examples of tax agency with reference to the operation S.4) are the current Italian Revenue Agency, the tax authorities of other countries or even private companies which collect taxes on behalf of governments.

Advantageously, in the operation S.3) the logic unit 4 generates the electronic invoice or draft electronic invoice or even the invoicing data packet automatically, that is to say, without a special human command, after having detected that the money transfer of the operation S.1) has been completed and has succeeded.

Advantageously, in the operation S.4) the logic unit 2 or 4 or if necessary another transmits the electronic invoice or draft electronic invoice or even the invoicing data packet to the tax agency, to the payer or to the payee automatically, that is to say, without a special human command, after having detected that said electronic invoice or draft electronic invoice or invoicing data packet has been correctly generated.

The logic unit 4 which in the operation S.3) generates an electronic invoice and/or a draft of that invoice and/or an invoicing data packet may be a logic unit contained in the payment terminal 7 or 9, in the client computer 5 or if necessary in the server 3.

If necessary, the two logic units 2, 4 may coincide and be made with a single logic unit.

Advantageously, the logic unit 2 obtains that administrative and tax data automatically, that is to say, activated by a software program and/or by an electronic and electromechanical device without the intervention of a human operator.

As shown in Figure 3, the payment management system 1 may also comprise a programming module 15 for the tag or tags which is set up to acquire from a vehicle - such as a car 17, lorry, boat or aircraft - the relevant tax data, for example the vehicle tax registration number, registration plate and/or chassis number of a car or lorry, mileage of a car or lorry, and to write them to the tag 13.

The tag programming module 15 may for example acquire the tax data of a car 17 or lorry by reading the electronic control unit 19 of the vehicle or its data communication bus, for example from a CAN or LIN bus.

A first possible example of implementation of the previously described method by means of the payment system 1 is as follows.

A customer goes into the T-shirt shop. The shop manages its sales using the client computer 5 and the payment terminal 7. The customer purchases a T-shirt and pays for it by swiping his or her credit card 11 in the POS terminal 7.

When it receives - for example from the bank or other payment intermediary - confirmation that the payment has been completed, the payment terminal 7 reads tax data of the customer, that is to say, of the payer, from the customer data tag 13 described above, the tag being provided on the credit card 11.

More specifically, the payment terminal 7 can read the customer tax data either directly from an internal memory of the tag 13, if it has one, or, if the tag 13 contains or is an RFID identifier, can recognise that RFID identifier, communicate its serial number, identification code or URL to a suitable database which associates with that RFID identifier data item the tax data of the payer and electronically sends them to the payment terminal 7 or if necessary to the client computer 5.

The payment terminal 7 automatically supplies the tax data of the seller/payee and of the customer/payer to the client computer 5, which generates an electronic invoice and/or a draft of that invoice and/or invoicing data packet relating to the payment and electronically sends it to the server 3 of the Italian Revenue Agency or other tax agency, and preferably to the customer/payer, for example by e-mail or another messaging service.

The client computer 5 preferably stores the electronic invoice and/or draft of that invoice and/or invoicing data packet in its own internal accounting archive for use by the seller.

The client computer 5 preferably stores the electronic invoice and/or draft of that invoice and/or invoicing data packet automatically.

The payment system 1 allows human intervention and manual activities to be rendered marginal or completely eliminated, significantly reducing invoicing and accounting times, errors drawing up the documents and completely fulfilling electronic invoicing obligations.

The payment system 1 is suitable for being produced in such a way that it does not interfere with the communications protocols of the POS/payment terminal 7, limiting itself to completing its job of supplying the invoicing system with the information necessary for issuing the electronic invoice.

The first step of the payment, that is to say, the electronic transfer of the money from the current account of the payer to that of the payee, may remain unchanged compared with current practice, in particular leaving the security protocols and other security measures unchanged.

A second possible example of implementation of the previously described method by means of the payment system 1 is now described.

The tag programming module 15 acquires in real time, for example from the electronic control unit 19 of the car 17, some relevant accounting data such as the vehicle mileage and, together with other constant data such as the registration plate and/or chassis number, writes said data to the tag 13 applied for example to a credit card or cash card.

When the owner or user of the car 17 refuels at a service station, the payment for the fuel can be managed by the payment terminal 7, by the client computer 5 and server 3 in an identical or in any case similar way to that already described in the example of payment for a T-shirt.

In the case of a fuel purchase, the system 1 allows automatic and fast management, or in any case with very limited intervention and engagement by humans, of the VAT deduction.

The above description shows how the management system 1 and method previously described can automate and very efficiently manage, with little or negligible engagement by human operators and little risk of errors, the accounting and above all tax accounting of many types of payments and in many situations, requiring minimal investments and management costs for adapting current electronic payment systems and without compromising their security levels at all.

The data collected in this way about each transaction can then easily be exported to suitable accounting software and databases belonging to the company of the payer and/or payee, and if necessary collected in a database for marketing and promotional purposes.

The management system 1 and method previously described simplify and facilitate the work of state authorities in the fight against tax evasion and in general in the calculation and collection of taxes.

The embodiments described above can be modified and adapted in several ways without thereby departing from the scope of the inventive concept.

For example, the system 1 and related method may be used for automating the tax accounting of any type of payment or transaction, for example for managing pre-paid cards for vending machines, public establishments, canteens, car washes, launderettes, drinks dispensers or public transport ticket machines.

Each reference in this description to an "embodiment", "an example embodiment" means that a particular characteristic or structure described with regard to that embodiment is included in at least one embodiment of the invention and specifically in a particular variant of the invention, as defined in a main claim.

The fact that these expressions appear in various parts of the description does not imply that they necessarily refer only to the same embodiment.

Moreover, when a characteristic, element or structure is described in relation to a particular embodiment, it should be noticed that it falls within the skills of the average technician to apply that characteristic, element or structure to other embodiments.

Finally, all details of the invention may be substituted by technically equivalent elements.

For example, the materials used, as well as the dimensions, may vary according to the technical requirements, whilst the examples and lists of possible variants of this application shall be understood as non-exhaustive lists.

## Claims

1. Method for the tax management of payments, comprising the following operations:
S.1) electronically transferring an amount of money from a payer to a payee;
S.2) obtaining by means of a first logic unit (2) a predetermined set of administrative and/or tax data relating to that money transfer;
S.3) generating by means of a second logic unit (4) an electronic invoice and/or a draft of that invoice/invoicing data packet relating to that money transfer;
S.4) electronically transmitting the invoicing data packet to one or more of the following subjects: a tax agency, the payer, the payee.

2. The method according to claim 1, wherein in the operation S.4) the electronic invoice and/or a draft of that invoice/invoicing data packet is sent from the second logic unit (4) to a server (3) managed by a government tax agency or operating in the interest of a state, automatically when that invoice, draft invoice or invoicing data packet are ready.

3. The method according to one or more of the preceding claims, wherein in the operation S.2) the administrative and/or tax data of the money transfer are obtained by means of an electronic payment terminal (7, 9), which is automatically activated when a server (6) of the bank or other payment intermediary of the payee communicates to the payment terminal (7, 9) and/or to the first logic unit (2) that the money transfer has been completed correctly.

4. The method according to claim 3, wherein the electronic payment terminal (7, 9) comprises one or more of the following devices: a smartphone or other mobile phone or hand-held electronic device for telecommunications, a data entry terminal comprising a keyboard and/or a reader for magnetic codes, bar codes, QR codes or other optically readable codes, microprocessors, RFID tags, a radio frequency receiver or transceiver, an NFC receiver or transceiver, a biometric data reader.

5. The method according to one or more of claims 1 to 4, wherein in the operation S.2) the electronic payment terminal (7, 9) obtains one or more relevant pieces of tax data relating to the payer from a customer data tag (13) in which those data are stored or to which the customer data tag (13) is linked and/or refers, said customer data tag (13) comprising one or more of the following entities: an RFID tag, an adhesive label, a digital memory for example of the RAM, EPROM, EEPROM type, a flash or magnetic-core memory, an F-RAM memory.

6. The method according to claim 5, wherein the customer data tag (13) is fixed to a credit card, cash card or other card for making payments, the outer shell or case of a smartphone, mobile phone or other hand-held device, or is inserted inside a smartphone, mobile phone or other hand-held device, loyalty card or other wearable device (bracelets, watches, rings, necklaces, etc).

7. The method according to one or more of the preceding claims, wherein in the operation S.2) the administrative and/or tax data of the money transfer are obtained from one or more of the following entities: an electronic control unit or other on-board logic unit (19) or from the on-board data communication bus of a motor vehicle, boat or aircraft.

8. The method according to claim 7, comprising the operation of transferring the administrative and/or tax data of the money transfer from the electronic control unit or other on-board logic unit (19) or from the on-board data communication bus of a motor vehicle, boat or aircraft to the customer data tag (13), according to which said administrative and/or tax data of the money transfer and/or the one or more relevant pieces of tax data of the payer are transferred to the customer data tag (13):
- storing them on the customer data tag (13); and/or
- storing them in a remote electronic archive or digital memory linked to the customer data tag (13).

9. System for the tax management of payments (1) programmed or set up for implementing the method according to one or more of the preceding claims, comprising a server (3), said first logic unit (2), said second logic unit (4) and one or more of the following entities: a client computer (5), a customer data tag (13), a tag programming module (15) programmed or in any case set up for transferring from the electronic control unit or other on-board logic unit (19) or from the on-board data communication bus of a motor vehicle, boat or aircraft to the customer data tag (13) the one or more relevant pieces of tax data of the payer.

10. Computer program, set up for implementing one or more of the operations S.2), S.3), S.4) according to one or more of claims 1 to 9 when executed by a logic unit (2, 3, 4, 5, 6, 7, 9).
